# FASCICULE DE BREVET EUROPEEN

(11) **EP 2 318 937 B1**
(45) Date de publication et mention de la délivrance du brevet: **26.03.2014**
(21) Numéro de dépôt: 09737071.2
(22) Date de dépôt: 16.07.2009
(51) Int. Cl.: G06F 13/42

(54) **TRANSMISSION MULTICANAUX SUR UN BUS UNIFILAIRE**
MEHRKANALIGE ÜBERTRAGUNG AUF EINEM EINLEITUNGSBUS
MULTICHANNEL TRANSMISSION ON UNIFILAR BUS

(30) Priorité: 22.07.2008 FR 0854983
(43) Date de publication de la demande: 11.05.2011
(73) Titulaire: ST Microelectronics (Rousset) SAS, 13790 Rousset (FR)
(72) Inventeur: TAILLIET, François, F-13710 Fuveau (FR)
(74) Mandataire: Thibon, Laurent
(86) Numéro de dépôt international: PCT/FR2009/051418
(87) Numéro de publication internationale: WO 2010/010278

(56) Documents cités:
- EP-A- 0 798 901
- FR-A- 2 550 901
- JP-A- 62 222 730
- US-A- 4 907 222
- US-A1- 2004 189 502

## Description

### Domaine de l'invention

La présente invention concerne de façon générale les transmissions de données entre deux circuits électroniques. L'invention concerne plus particulièrement la transmission simultanée, sur un même fil, d'un signal d'alimentation, d'horloge et de données entre un circuit maître et un ou plusieurs circuits esclaves.

### Etat de la technique

Les protocoles de communication entre un circuit maître et un circuit esclave qui transmettent, sur un même fil, un signal d'alimentation, de synchronisation et de données sont généralement appelés protocoles unifilaires. Le plus souvent, les circuits maître et esclave ont en outre une référence de tension commune (typiquement la masse).

Le brevet américain N° 5 903 607 décrit un système de transmission sur bus unifilaire en mode bidirectionnel.

La figure 1 est un schéma-blocs simplifié d'un tel système de transmission.

Les figures 2A, 2B et 2C sont des chronogrammes illustrant le fonctionnement du système de la figure 1.

Un circuit électronique maître 1 (MD) est relié, par un bus unifilaire B, à un circuit esclave 3 (SD). Les circuits 1 et 3 partagent en outre la même masse ou plus généralement un même potentiel de référence (GND). Le circuit 1 (par exemple, un circuit de traitement de type microprocesseur) est alimenté par un potentiel Vcc, par exemple positif par rapport à la masse. Le circuit 3 (par exemple, une mémoire ou un autre circuit de traitement) n'est généralement pas alimenté de façon autonome et tire son alimentation de la transmission sur le bus de communication. Pour clarifier la présence d'une référence de tension commune, le bus B bien que considéré unifilaire a été représenté aux figures en incluant un fil 4 de masse en plus d'un fil 2 sur lequel transite le signal S d'alimentation, d'horloge et de données. La connexion à la masse 4 peut être fonctionnelle par le reste des éléments du circuit ou du dispositif.

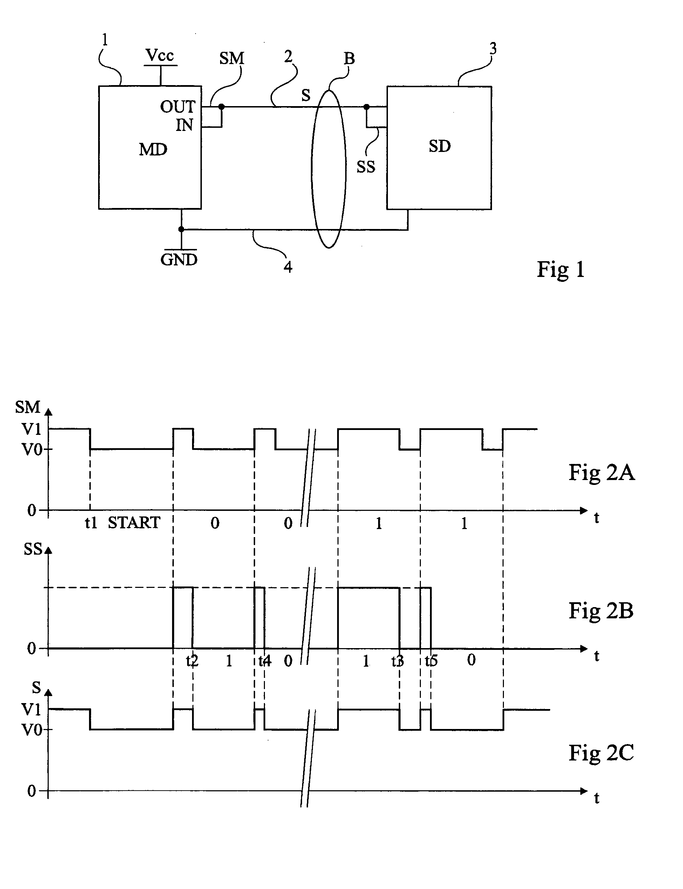

Le circuit maître 1 comporte des interfaces de sortie et d'entrée illustrées en figure 1 respectivement par des bornes OUT de sortie et IN d'entrée reliées au fil S. Le circuit esclave 3 comporte également des interfaces d'entrée et de sortie illustrées par des bornes d'entrée IN et de sortie OUT.

Les figures 2A à 2C sont des chronogrammes illustrant une transmission de données dans un mode bidirectionnel entre le circuit maître 1 et le circuit esclave 3.

La figure 2A illustre un exemple d'allure de signal SM imposé par le circuit maître 1. La figure 2B illustre l'allure d'un signal SS imposé par le circuit esclave 3 pour transmettre des données en retour. La figure 2C illustre l'allure du signal S résultant sur le bus. Le signal S correspond au signal présent sur les bornes IN des circuits 1 et 3. Pour simplifier, on a schématisé les signaux SM et SS comme provenant respectivement des circuits d'émission du circuit maître 1 et du circuit esclave 3 et on considère que les circuits de réception connectés aux bornes IN ne voient que le niveau du signal S.

Le circuit maître 1 module le signal SM en amplitude entre deux niveaux V1 et V0, par exemple tous deux positifs, selon un codage prédéfini. En fait, le circuit 1 module au rythme d'une horloge, les largeurs d'impulsions au niveau V1 selon l'état du bit à transmettre. Le circuit esclave tire son alimentation d'un filtrage du niveau du signal S. Le niveau de repos du signal S est par exemple le niveau V1. Dans l'exemple représenté, une transmission est initialisée par un bit de démarrage START dans lequel le signal SM est positionné (instant t1) à un niveau V0 alors que son niveau de repos est le niveau V1. Cela initialise le circuit esclave 3 et le prépare à recevoir des données et à en transmettre en retour. Le circuit maître 1 module le niveau du signal SM au rythme d'un signal d'horloge qui fixe le débit de transmission et qui permet au circuit esclave d'extraire une horloge de séquencement de son fonctionnement et de synchronisation de la transmission avec le circuit maître. La transmission d'un bit à l'état 0 s'effectue, par exemple, avec une impulsion de niveau V1 de durée inférieure à la demi-période du signal d'horloge (par exemple, 1/4 de la période) alors qu'un état 1 est codé avec une impulsion de niveau V1 de durée supérieure à la demi-période du signal d'horloge (par exemple, 3/4 de la période). Le circuit esclave 3 détecte la variation d'amplitude et la durée correspondante des impulsions hautes et basses pour déterminer la valeur des bits transmis. Dans le sens circuit esclave 3 vers circuit maître 1 (figure 2B), le circuit esclave modifie la charge qu'il impose sur le fil S selon l'état du bit qu'il souhaite transmettre. Dans l'exemple de la figure 2B, le circuit esclave ne modifie pas la charge pour transmettre un 1 (instants t2 et t3). Pour transmette un 0 (instants t4 et t5), il tire (instants t4 et t5) le signal SS au niveau bas, ce qui a pour conséquence de réduire la durée de l'impulsion du signal S. Cela revient, pour le circuit esclave, à moduler la largeur des impulsions de niveau V1 du signal S selon l'état du bit à transmettre. Le circuit maître surveille le niveau du signal S et, si le niveau qu'il a transmis n'est pas modifié, considère une réponse par un état 1, alors que s'il détecte une modification de durée de l'impulsion par rapport à celle qu'il transmet, il considère la réception d'un état 0.

Un protocole unifilaire tel qu'exposé en relation avec les figures ci-dessus présente un débit limité par la période du signal d'horloge imposé par le circuit maître. De plus, le circuit maître ne peut transmettre qu'un seul signal vers des circuits esclave.

Le document JP 62-222730 décrit un procédé de transmission sur une ligne unique en multiplexage par division du temps d'une impulsion dont l'amplitude est modifiée. Le niveau bas d'une modulation d'amplitude correspond à la masse, et le niveau haut d'une modulation d'amplitude est choisi parmi plusieurs niveaux affectés à différents canaux. Un tel protocole de transmission n'est pas adapté à une transmission à un dispositif esclave qui tire son alimentation du bus de transmission.

### Résumé de l'invention

Il serait souhaitable de disposer d'un protocole de communication maître-esclave dans lequel un même circuit maître puisse communiquer simultanément avec plusieurs circuits esclaves en leur transmettant des données différentes.

Il serait également souhaitable d'accroître le débit de transmission d'un protocole unifilaire sans requérir une augmentation de la fréquence d'horloge.

Pour atteindre tout ou partie de ces objets ainsi que d'autres, il est prévu un procédé de transmission d'un signal au moins de synchronisation et de données sur un bus unifilaire entre un dispositif maître et au moins un dispositif esclave, tel que revendiqué dans la revendication 1.

La revendication 11 défini

un dispositif électronique de communication adapté à transmettre des données selon ce procédé. D'autres modes de réalisation de l'invention sont spécifiés dans les revendications dépendantes attenantes.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, décrite précédemment, est un schéma-blocs d'un système de communication entre un circuit maître et un circuit esclave dans un protocole unifilaire ;
les figures 2A, 2B et 2C, décrites précédemment, sont des chronogrammes illustrant un fonctionnement usuel du système de la figure 1 ;

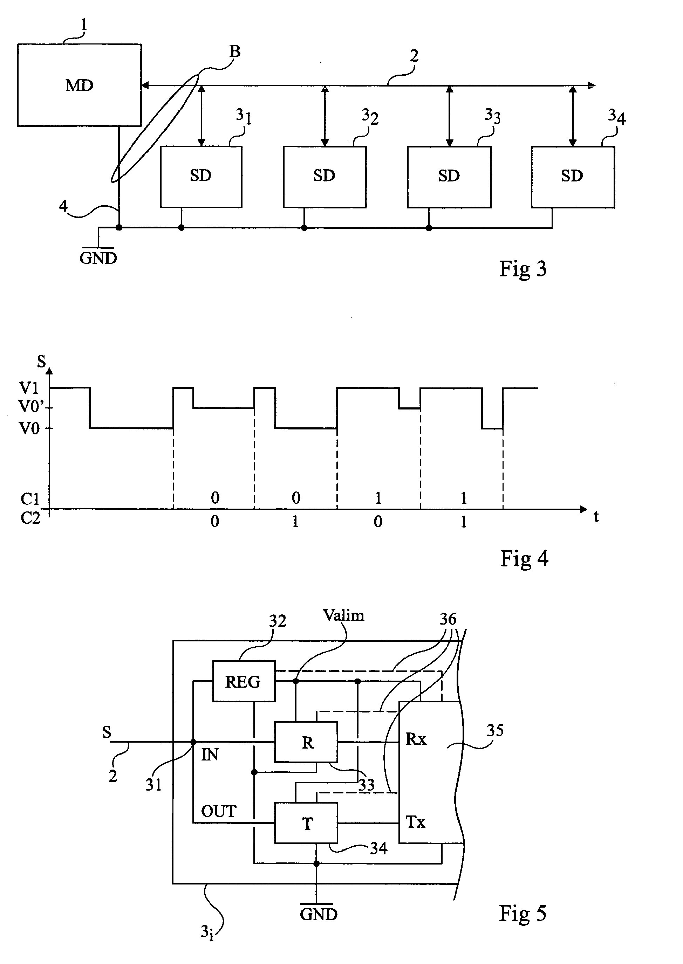

la figure 3 est un schéma-blocs d'un mode de réalisation d'un système de communication unifilaire ;
la figure 4 est un chronogramme illustrant le fonctionnement d'un protocole unifilaire multicanaux ;
la figure 5 est un schéma-blocs partiel d'un circuit esclave du système de la figure 3 ;

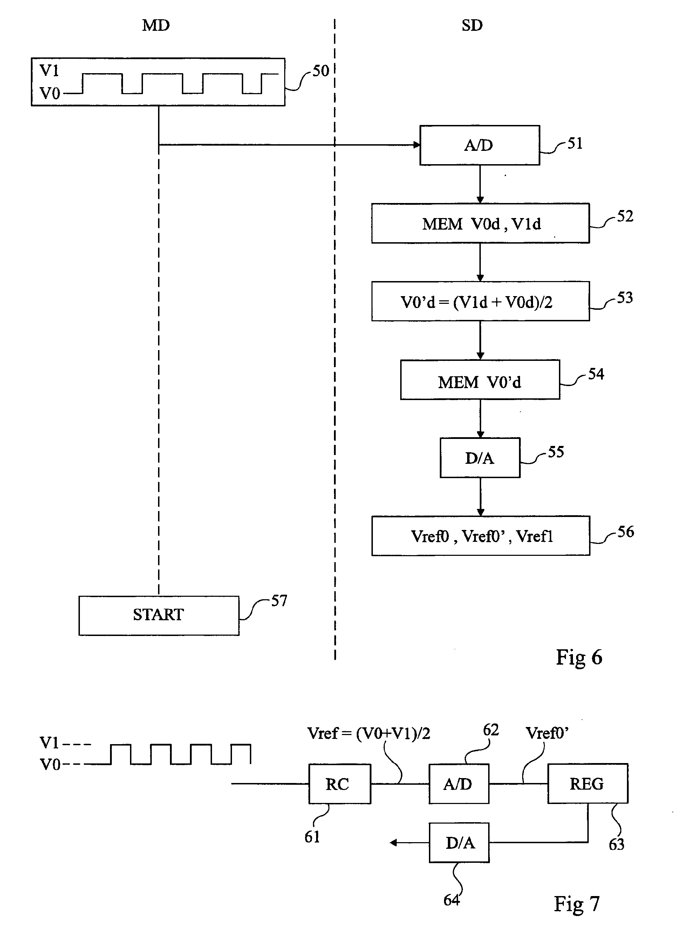

la figure 6 est un organigramme simplifié illustrant une phase d'initialisation d'une communication ; et
la figure 7 est un schéma-blocs d'un détail de réalisation d'un circuit de réception côté dispositif esclave.

De mêmes éléments ont été désignés par de mêmes références et les chronogrammes ont été tracés sans respect d'échelle.

### Description détaillée

Par souci de clarté, seuls les étapes et éléments utiles à la compréhension de l'invention ont été représentés et seront décrits. En particulier, la génération des signaux côté dispositif maître ou dispositif esclave n'a pas été détaillée, l'invention étant compatible avec la génération habituelle de signaux dans un protocole maître-esclave exploitant une liaison unifilaire.

La figure 3 est un schéma-blocs d'un mode de réalisation d'un système de communication entre un dispositif maître 1 (MD) et un ou plusieurs dispositifs esclaves 3₁, 3₂, 3₃, 3₄ (SD) sur un bus B constitué d'une liaison unifilaire 2 de transmission d'un signal d'alimentation, d'horloge et de données et d'un fil 4 de référence commune (par exemple, la masse GND).

La figure 4 est un chronogramme illustrant le niveau du signal S selon un exemple de réalisation du système de la figure 3.

Par rapport au protocole décrit en relation avec les figures 2A à 2C, un niveau intermédiaire V0' entre les niveaux V0 et V1, est pris en compte par un ou plusieurs circuits esclave. Ce niveau intermédiaire correspond à un deuxième canal de transmission utilisable par le circuit maître à destination d'un ou plusieurs des dispositifs esclave.

L'exploitation d'un premier canal C1 s'effectue comme précédemment par modulation de la largeur des impulsions de niveau V0 (ou V1) du signal S entre deux largeurs selon l'état 0 ou 1 à transmettre. Dans l'exemple représenté à la figure 4, on suppose la transmission successive de deux états 0 suivis de deux états 1.

Dans l'exemple de la figure 4, l'exploitation d'un deuxième canal C2 numérique consiste à moduler le niveau bas de ce train d'impulsions entre le niveau V0 et un niveau V0' pour conditionner l'état des bits transmis. Par exemple, ce deuxième canal C2 transmet successivement un état 0, un état 1, un état 0 et un état 1 en supposant que le niveau V0' correspond à la transmission d'un état 0 et le niveau V0 à la transmission d'un état 1.

Côté réception, la détection du canal C1 s'effectue soit en détectant les niveaux V0 et V1, soit en détectant les fronts du signal S, et en déduisant de ces détections, la durée des impulsions au niveau V1. La détection du canal C2 s'effectue en détectant le niveau de tension intermédiaire V0' par rapport aux niveaux V0 et V1. Cela signifie que le circuit de détection est capable de discriminer au moins un niveau intermédiaire entre les niveaux V0 et V1.

En variante, un troisième canal est utilisé en modulant le niveau haut V1 en fonction de l'état des bits transmis. Selon une autre variante, plusieurs niveaux intermédiaires sont exploités entre les niveaux V0 et V1. Toutefois, une telle variante requiert une précision accrue dans les détecteurs de tension des récepteurs.

Selon une autre variante, le deuxième canal transmet des données analogiques. Une exploitation analogique du deuxième canal consiste à moduler l'amplitude du niveau intermédiaire V0' entre les niveaux V0 et V1 en gardant une marge entre les extrêmes de la plage de modulation et ces niveaux V0 et V1 pour ne pas nuire à la détection du premier canal.

La figure 5 est un schéma-blocs partiel d'un mode de réalisation d'un circuit esclave 3i. La liaison unifilaire 2 est reliée à une borne 31 du circuit 3i, partagée entre une borne d'entrée d'un régulateur de tension 32 (REG), une borne d'entrée d'un circuit de réception 33 (R) et une borne de sortie OUT d'un circuit d'émission 34 (T). Tous les circuits sont alimentés par une tension Valim fournie par le régulateur de tension 32 à partir du signal présent sur la borne 31. Les circuits 33 et 34 communiquent avec une unité de traitement 35 en étant respectivement reliés à des bornes Rx de réception et Tx d'émission. Par ailleurs, les circuits 32, 33 et 34 sont commandés par l'unité 35 (liaison de commande 36 illustrée par des pointillés). On suppose que le circuit 33 est capable, non seulement de détecter les niveaux V0 et V1, mais également le niveau V0'.

De préférence, le circuit 33 est capable d'adapter ses niveaux de détection dans une procédure d'apprentissage. Cela permet de tenir compte d'éventuelles variations de ces niveaux. Par exemple, cela permet à un même circuit esclave de s'adapter à différents circuits maîtres dont les niveaux de tension transmis sont différents. Selon un autre exemple, cela permet de compenser d'éventuelles dérives des tensions au cours du temps.

La figure 6 est un organigramme simplifié d'une procédure d'acquisition des niveaux de tension à détecter par le circuit de réception 33 de la figure 5. Dans cet exemple, on suppose que le niveau V0' correspond au niveau moyen entre les niveaux V0 et V1. Le circuit maître MD (partie gauche de la figure 6) émet (bloc 50) un train d'impulsions d'une séquence préétablie entre les niveaux V0 et V1. En réception côté circuit esclave, la tension sert d'une part à fournir une tension d'alimentation Valim et un signal d'horloge. Par ailleurs, le signal reçu est converti (bloc 51, A/D) en niveaux numériques. Puis, les niveaux mesurés, discriminés entre les niveaux haut et bas V0d et V1d, sont mémorisés (bloc 52, MEM). On calcule alors la valeur moyenne V0'd entre les deux niveaux V0'd = (V1d+V0d)/2 dans un bloc 53 afin de mémoriser le niveau intermédiaire V0'd (bloc 54, MEM) représentant le deuxième canal. L'ensemble des niveaux est ensuite reconverti en signaux analogiques de référence (bloc 55 - conversion numérique-analogique D/A). Enfin, les niveaux analogiques obtenus Vref0, Vref0' et Vref1 (bloc 56) sont exploités par des comparateurs (non représentés) du circuit de réception (33, figure 5) pour déterminer le niveau du signal reçu.

Une fois cette phase d'acquisition effectuée, le dispositif maître peut déclencher une transmission (bloc 57, START).

La figure 7 illustre une variante de réalisation selon laquelle le train d'impulsions fourni par le dispositif maître dans une procédure d'acquisition est un signal carré entre les amplitudes V0 et V1. Ce signal peut être traité par un moyenneur (bloc 61 constitué par exemple d'un circuit résistif et capacitif RC) qui fournit un niveau de référence Vref=(V0+V1)/2. Ce niveau de référence est fourni à un convertisseur analogique-numérique (bloc 62, A/D) pour produire une valeur de référence Vref0' mémorisée (bloc 63, REG) par exemple dans un registre. La valeur contenue dans le registre est ensuite exploitée après conversion en signal analogique (bloc 64, D/A) pour fournir un signal de comparaison analogique.

Les niveaux de référence servant à discriminer les états reçus sont exploités par le circuit de réception à la manière d'un détecteur usuel de niveau avec ou sans hystérésis. Selon une variante plus particulièrement destinée à des applications dans lesquelles les niveaux V0, V0' et V1 sont déterminés et stables, les niveaux de référence des comparateurs du circuits de réception correspondent, par exemple, à des niveaux numériques mémorisés ou à des niveaux analogiques fixés, par exemple, par un ou plusieurs ponts résistifs à partir de la tension d'alimentation.

D'autres trames d'apprentissage peuvent être prévues, notamment pour fixer d'autres niveaux intermédiaires.

On peut également prévoir que le dispositif esclave détecte les 0 ou 1 transmis sur le premier canal par une détection de fronts. Pour une détection par fronts, on peut prévoir de détecter les fronts montants et descendants présents sur le bus à l'aide de comparateurs et de portes logiques. Une telle détection ne permet pas de discriminer un deuxième canal éventuel. Par conséquent, un dispositif esclave équipé uniquement d'un détecteur de fronts ne sera capable de détecter que les données transmises sur le premier canal.

L'utilisation d'un deuxième canal ne nuit pas au caractère bidirectionnel de la transmission. Il reste possible à l'un des circuits esclave ou à plusieurs d'entre eux d'émettre en retour, de façon usuelle, en réduisant ou non la largeur des impulsions au niveau V1 selon l'état à transmettre.

Différentes applications sont possibles en exploitant le protocole de communication décrit ci-dessus.

Selon un premier exemple, l'utilisation de ce deuxième canal permet de doubler le débit de communication.

Selon un autre exemple, ce deuxième canal peut servir à transmettre des données cryptées.

Selon encore un autre exemple, des dispositifs esclaves compatibles avec diverses applications peuvent identifier quelle application est utilisée en examinant les niveaux de tension présents sur le bus.

Selon encore un autre exemple, la transmission peut être destinée à différents dispositifs esclave de façon simultanée, chacun d'entre eux exploitant un des canaux transmis.

L'adaptation des niveaux de référence par les dispositifs esclaves permet, de façon induite, d'utiliser un circuit maître pour communiquer avec des circuits esclaves dimensionnés pour travailler sous des tensions différentes.

En outre, une modification des niveaux V0 et V1 par le circuit maître peut être utilisée pour révoquer un circuit esclave (par exemple, un circuit esclave dédié à un fonctionnement sous des niveaux V0 et V1 donnés) sans utiliser le canal de communication.

Selon une variante de réalisation, le deuxième canal est utilisé pour une transmission dans le sens esclave vers maître. Cela permet une communication en full-duplex, l'esclave pouvant renvoyer un bit au maître chaque fois qu'il reçoit un bit de celui-ci. Le dispositif esclave doit pour cela être capable (comme le maître) de moduler le niveau du signal avec le ou les niveaux intermédiaires. On peut par exemple prévoir que le dispositif esclave impose ses propres niveaux que le dispositif maître détecte dans une phase d'apprentissage similaire à celle décrite ci-dessus pour la détection par le dispositif esclave des niveaux transmis par le dispositif maître. Selon un autre exemple, les niveaux restent fixés par le dispositif maître et le dispositif esclave mémorise ces niveaux dans une séquence d'apprentissage pour s'en servir ensuite de consignes.

Un système de communication exploitant le protocole multicanaux décrit se traduit, sur la liaison unifilaire, par une variation du niveau de tension parmi au moins trois valeurs pendant la communication.

Divers modes de réalisation ont été décrits. Diverses modifications sont à la portée de l'homme du métier. En particulier, la réalisation pratique de l'invention à partir des indications fonctionnelles données ci-dessus est à la portée de l'homme du métier. De plus, on a fait référence aux termes dispositif/circuit maître et esclave pour désigner n'importe quel élément communiquant. Il peut s'agir de circuits d'un même appareil, d'appareils différents et un même dispositif ou circuit esclave peut, selon les applications, exploiter un ou plusieurs des canaux transmis. En outre, bien que l'invention ait été plus particulièrement décrite en relation avec un dispositif esclave tirant son alimentation du bus de transmission, le protocole multicanaux décrit s'applique également aux circuits esclave alimentés indépendamment de ce bus (par exemple, en étant connecté à un bus spécifique de fourniture d'une tension d'alimentation d'un dispositif intégrant les circuits maître et esclave, ou en étant alimenté par batterie ou autre).

Selon un exemple particulier de réalisation, le bus de communication est utilisé entre une imprimante (dispositif maître 1) et sa ou ses cartouches d'encre (dispositifs esclave 3₁, 3₂, 3₃ et 3₄).

## Revendications

1. Procédé de transmission d'un signal (S) au moins de synchronisation et de données sur un bus unifilaire (B) entre un dispositif maître (1) et au moins un dispositif esclave (3₁, 3₂, 3₃, 3₄ ; 3ᵢ), ledit signal fournissant l'alimentation du dispositif esclave, dans lequel :
un premier canal (C1) de transmission du dispositif maître vers le dispositif esclave module la largeur d'impulsions périodiques entre un premier niveau (V0) et un deuxième niveau (V1) de tension de même signe par rapport à un potentiel de référence (GND), **caractérisé en ce que** :
un deuxième canal (C2) de transmission module en amplitude au moins un des premier et deuxième niveaux de tension entre ledit premier ou deuxième niveau et au moins un troisième niveau (V0') compris entre les premier et deuxième niveaux (V0, V1) et différent du potentiel de référence.

2. Procédé selon la revendication 1, dans lequel la modulation d'amplitude du deuxième canal (C2) est analogique entre les premier (V0) et deuxième (V1) niveaux.

3. Procédé selon la revendication 1, dans lequel la modulation d'amplitude du deuxième canal (C2) est numérique entre les premier (V0) et troisième (V0') niveaux.

4. Procédé selon l'une quelconque des revendications 1 à 3, dans lequel une détection du premier canal (C1) s'effectue en détectant des fronts montants ou descendants du signal.

5. Procédé selon l'une quelconque des revendications 1 à 3, dans lequel une détection du premier canal (C1) s'effectue par mesure des niveaux de tension.

6. Procédé selon l'une quelconque des revendications 1 à 5, dans lequel une détection du deuxième canal (C2) s'effectue par mesure de niveaux d'amplitude.

7. Procédé selon l'une quelconque des revendications 1 à 6, dans lequel le deuxième canal est utilisé dans le sens maître vers esclave.

8. Procédé selon l'une quelconque des revendications 1 à 6, dans lequel le deuxième canal (C2) est utilisé dans le sens esclave vers maître.

9. Procédé selon l'une quelconque des revendications 1 à 7, dans lequel le dispositif esclave (3₁, 3₂, 3₃, 3₄ ; 3ᵢ) module la largeur desdites impulsions en fonction de l'état de bits de données à transmettre dans le sens esclave vers maître.

10. Système de communication selon un protocole unifilaire transmettant à la fois un niveau d'alimentation, un signal de synchronisation et des données sur un même fil (2), **caractérisé en ce qu'**il comporte des moyens pour la mise en oeuvre du procédé conforme à l'une quelconque des revendications 1 à 9.

11. Dispositif électronique de communication (1 ; 3₁, 3₂, 3₃, 3₄ ; 3ᵢ) adapté à transmettre des données selon un procédé conforme à l'une quelconque des revendications 1 à 9.

## Patentansprüche

1. Ein Verfahren zum Senden von wenigstens einem Synchronisationssignal (S) und Daten über einen Einfachleitungsbus (B) zwischen einem Mastergerät (1) und wenigstens einem Slavegerät (3₁, 3₂, 3₃, 3₄; 3ᵢ), wobei das Signal die Stromversorgung für das Slavegerät bereitstellt, wobei:
ein erster Übertragungskanal (C1) von dem Mastergerät zu dem Slavegerät die Breite eines periodischen Pulses zwischen einem ersten Spannungspegel (V0) und einem zweiten Spannungspegel (V1) von gleicher Polarität bezüglich einem Referenzpotential (GND) moduliert, **dadurch gekennzeichnet, dass**:
ein zweiter Übertragungskanal (C2) die Amplitude von wenigstens einem der ersten und zweiten Spannungspegel zwischen dem ersten oder dem zweiten Spannungspegel und wenigstens einem dritten Spannungspegel (V0'), der zwischen dem ersten und dem zweiten Pegel (V0, V1) liegt und unterschiedlich zu dem Referenzpotential ist, moduliert.

2. Das Verfahren nach Anspruch 1, wobei die Amplitudenmodulation des zweiten Kanals (C2) analog ist zwischen dem ersten Pegel (V0) und dem zweiten Pegel (V1).

3. Das Verfahren nach Anspruch 1, wobei die Amplitudenmodulation des zweiten Kanals (C2) digital ist zwischen dem ersten Pegel (V0) und dem dritten Pegel (V0').

4. Das Verfahren nach einem der Ansprüche 1 bis 3, wobei eine Detektion des ersten Kanals (C1) ausgeführt wird durch das Detektieren von ansteigenden oder abfallenden Flanken des Signals.

5. Das Verfahren nach einem der Ansprüche 1 bis 3, wobei eine Detektion des ersten Kanals (C1) ausgeführt wird durch das Messen der Spannungspegel.

6. Das Verfahren nach einem der Ansprüche 1 bis 5, wobei eine Detektion des zweiten Kanals (C2) ausgeführt wird durch das Messen der Amplitudenpegel.

7. Das Verfahren nach einem der Ansprüche 1 bis 6, wobei der zweite Kanal in der Master-zu-Slave Richtung verwendet wird.

8. Das Verfahren nach einem der Ansprüche 1 bis 6, wobei der zweite Kanal (C2) in der Slave-zu-Master Richtung verwendet wird.

9. Das Verfahren nach einem der Ansprüche 1 bis 7, wobei das Slavegerät (3₁, 3₂, 3₃, 3₄, 3ᵢ) die Breite des Pulses moduliert, entsprechend dem Zustand der Datenbits, die in der Slave-zu-Master Richtung gesendet werden.

10. Ein Kommunikationssystem entsprechend einem Einfachleitungsprotokoll, welches zur gleichen Zeit einen Versorgungspegel, ein Synchronisationssignal und Daten über eine selbe Leitung (2) sendet, **dadurch gekennzeichnet, dass** es Mittel aufweist zum Implementieren des Verfahrens nach einem der Ansprüche 1 bis 9.

11. Eine elektronisches Kommunikationsgerät (1; 3₁, 3₂, 3₃, 3₄; 3ᵢ) das geeignet ist Daten entsprechend dem Verfahren nach einem der Ansprüche 1 bis 9 zu senden.

## Claims

1. A method for transmitting a signal (S) at least of synchronization and data over a single-wire bus (B) between a master device (1) and at least one slave device (3₁, 3₂, 3₃, 3₄; 3ᵢ), said signal providing the power supply of the slave device, wherein:
a first transmission channel (C1) from the master device to the slave device modulates the width of periodic pulses between a first voltage level (V0) and a second voltage level (V1) of same sign with respect to a reference potential (GND), **characterized in that**:
a second transmission channel (C2) modulates the amplitude of at least one of the first and second voltage levels between the first or second level and at least one third level (V0') ranging between the first and second levels (V0, V1) and different from the reference potential.

2. The method of claim 1, wherein the amplitude modulation of the second channel (C2) is analog between the first (V0) and second (V1) levels.

3. The method of claim 1, wherein the amplitude modulation of the second channel (C2) is digital between the first (V0) and third (V0') levels.

4. The method of any of claims 1 to 3, wherein a detection of the first channel (C1) is performed by detecting rising or falling edges of the signal.

5. The method of any of claims 1 to 3, wherein a detection of the first channel (C1) is performed by measurement of the voltage levels.

6. The method of any of claims 1 to 5, wherein a detection of the second channel (C2) is performed by measurement of amplitude levels.

7. The method of any of claims 1 to 6, wherein the second channel is used in the master-to-slave direction.

8. The method of any of claims 1 to 6, wherein the second channel (C2) is used in the slave-to-master direction.

9. The method of any of claims 1 to 7, wherein the slave device (3₁, 3₂, 3₃, 3₄; 3i) modulates the width of said pulses according to the state of data bits to be transmitted in the slave-to-master direction.

10. A system of communication according to a single-wire protocol transmitting at the same time a supply level, a synchronization signal, and data over a same wire (2), **characterized in that** it comprises means for implementing the method of any of claims 1 to 9.

11. An electronic communication device (1; 3₁, 3₂, 3₃, 3₄; 3i) capable of transmitting data according to the method of any of claims 1 to 9.
